(19) Europäisches Patentamt
European Patent Office
Office européen des brevets

(11) **EP 1 834 813 B1**

(12) **EUROPEAN PATENT SPECIFICATION**

(45) Date of publication and mention
of the grant of the patent:
**27.03.2013 Bulletin 2013/13**

(51) Int Cl.:
***B60C 11/04*** ***(2006.01)***

(21) Application number: **05806034.4**

(22) Date of filing: **11.11.2005**

(86) International application number:
**PCT/JP2005/020709**

(87) International publication number:
**WO 2006/057169 (01.06.2006 Gazette 2006/22)**

(54) **TIRE FOR HEAVY DUTY VEHICLE**

REIFEN FÜR SCHWERFAHRZEUGE

PNEUMATIQUE POUR VÉHICULE LOURD

(84) Designated Contracting States:
**ES FR LU**

(30) Priority: **26.11.2004 JP 2004341738**

(43) Date of publication of application:
**19.09.2007 Bulletin 2007/38**

(73) Proprietor: **Bridgestone Corporation**
**Tokyo 104-8340 (JP)**

(72) Inventor: **YODA, Hidetoshi**
**c/o BRIDGESTONE CORPORATION**
**Tokyo 1048340 (JP)**

(74) Representative: **Waldren, Robin Michael et al**
**Marks & Clerk LLP**
**90 Long Acre**
**London**
**WC2E 9RA (GB)**

(56) References cited:
**EP-A1- 1 403 098      WO-A1-02/100664**
**JP-A- 03 086 603      JP-A- 07 081 323**
**JP-A- 11 034 614      JP-A- 2001 055 017**
**JP-A- 2004 262 295**

## Description

Technical Field

The present invention relates to a tire for a heavy duty vehicle whose anti-wear performance is improved, and more specifically to a tire for a heavy duty vehicle that is optimal particularly for use in mines and construction sites.

Background Art

At mines and construction sites, tires for heavy duty vehicles that transport ores and surface soil have conventionally been used.

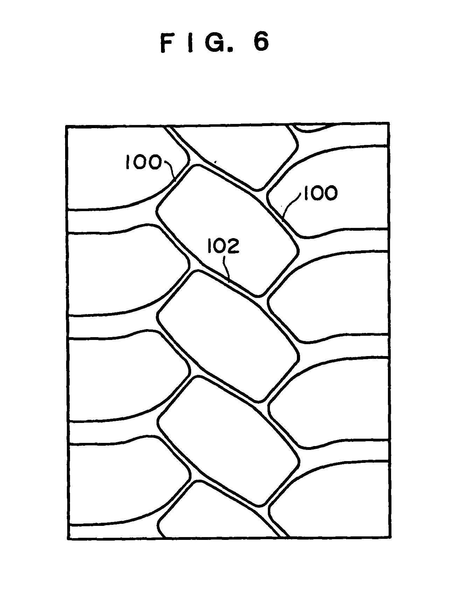

Incidentally, as a tire for a heavy duty vehicle that includes a tread pattern with high wear resistance, disposing narrow grooves in the land portion of the tire center region to make the negative ratio smaller than has conventionally been the case has been proposed (e.g., see Patent Documents 1 to 4, FIG 6). By forming this tread pattern, an evaluation is obtained in which wear resistance improves on ordinary dry road surfaces in mines.

However, even if excellent anti-wear performance is obtained by forming this tread pattern, anti-wear performance significantly drops in mines where there is a lot of rain and the road surfaces are always wet and muddy. Further, in mines where there is a rainy season and a dry season, anti-wear performance significantly drops in the wet season in comparison to the dry season.

Patent Document 1: WO02/100664
Patent Document 2: JP-ANo. 2001-225608
Patent Document 3: JP-ANo. 2000-233610
Patent Document 4: JP-A No. 2001-277816

Document JP 2004262295 discloses a tire according to the preamble of claim 1.

Disclosure of the Invention

Problem that the Invention is to Solve

In view of the above-described circumstances, it is an object of the present invention to provide a tire for a heavy duty vehicle whose wear resistance is excellent on both wet and dry road surfaces.

Means for Solving the Problem

The present inventor considered the reason why anti-wear performance significantly drops on wet road surfaces in mines. Additionally, the present inventor found that when a tire runs on a wet road surface in a mine, the narrow grooves formed in the center region in the tread surface end up closing and, as a result, slippage resulting from a significant drop in the edge components of the pattern - that is, a drop in traction performance and braking performance - and skidding occur.

The amount of wear of a tire is basically proportional to load x slip amount. Consequently, the present inventor understood that a significant drop in anti-wear performance on wet road surfaces is triggered by tire slippage occurring on wet and muddy road surfaces in this manner.

Thus, the present inventor thoroughly considered tire structures that control the occurrence of such slippage and arrived at the completion of the present invention through repeated experiments.

An invention recited in claim 1 is a tire for a heavy duty vehicle that sequentially includes, on the outside of a crown portion of a carcass extending toroidally, a belt and a tread portion disposed with grooves, the tire comprising: one center land portion row that straddles a tire centerline, being disposed in a center region of the tread portion, with a pair of circumferential direction auxiliary grooves being formed on both sides of the tire centerline, a distance between amplitude centerlines of the pair of circumferential direction auxiliary grooves being within the range of 25 to 65% of a tread width, width direction narrow width grooves formed to interconnect the pair of circumferential direction auxiliary grooves, whereby the center land portion row is configured by numerous pseudo-block rows, and a pair of block rows partitioned by the pair of circumferential direction grooves and by lug grooves, on both tire width direction sides of the pair of circumferential direction auxiliary grooves, wherein the negative ratio of the center land portion row is within the range of 10 to 20%, the negative ratios of the block rows are both within the range of 15 to 27%, the groove depths of the circumferential direction auxiliary grooves and the width direction narrow width grooves are within the range of 70 to 100% of the groove depth of the lug grooves, the groove width of the circumferential direction auxiliary grooves is within the range of 5 to 15% of one pitch of the lug grooves, the groove width of the width direction narrow width grooves is within the range of 3.5 to 4.5% of one pitch of the lug grooves, and an average angle that the lug grooves form with respect to a tire circumferential direction is within the range of 65 to 80°.

**[0011]** [0010] Here, "tread width" is the distance between tread ends on both sides in the tire width direction. "Tread ends" mean the outermost ground contact portions in the tire width direction when the tire for a heavy duty vehicle is placed on a standard rim stipulated in the JATMA Year Book (2002 version; Japan Automotive Tire Manufacturers Association standard), the tire is filled to an internal pressure of 100% of the air pressure (maximum air pressure) corresponding to the maximum load capability (bold character load in table corresponding to internal pressure/load capability) in the applied size/play rating in JATMA Year Book, and the tire bears the maximum load capability. It will be noted that when the TRA standard or the ETRTO standard is used in the location of use or the location of manufacture, these respective standards are followed.

The circumferential direction auxiliary grooves have a relatively narrow width.

When the distance between the amplitude centerlines of the pair of circumferential direction auxiliary grooves is shorter than 25% of the tread width, the rigidity of the center land portion row drops and wear on the center land portion becomes greater, which is not preferable. When the distance between the amplitude centerlines of the pair of circumferential direction auxiliary grooves is longer than 65% of the tread width, block breakage can occur at the tire width direction outer sides from the circumferential direction auxiliary grooves, which is not preferable.

Movement of the tread pattern from step-in to kick-out is a large cause of wear. In order to control this movement, it is necessary to make the negative ratio in the center region 20% or less. Further, in order to maintain heat releasability, it is necessary to make the negative ratio in the center region 10% or more.

In order to ensure traction performance of the shoulder portions, it is necessary to make the negative ratios of both side regions that are both tire width direction sides of the pair of circumferential direction auxiliary grooves of the tread portion 15% or more. Further, when the negative ratio of both side regions becomes greater than 27%, the shoulder blocks-become too small, the movement of the shoulder blocks becomes larger, and wear resistance becomes worse. Consequently, it is necessary to make the negative ratios of both side regions 27% or less.

Further, in the invention recited in claim 1, the width direction narrow width grooves are disposed in the center land portion row formed in one row in the center region. The width direction narrow width grooves eliminate the difference in the diameters of the centerline portion and the shoulder portions and make the ground contact distribution flat because the grooves close within the tread surface during ground contact. In order to obtain this effect, a groove width of 3.5% or greater of the pitch length (one pitch) of the lug grooves is necessary, but when the groove width is wider than 4.5%, the grooves do not close completely and the rigidity of the centerline portion drops, which leads to a drop in wear resulting from movement during block kick-out.

The circumferential direction auxiliary grooves have a groove width of 5% or greater of the pitch length of the lug grooves, whereby the edge component within the ground contacting tread surface increases, slippage on wet and muddy road surfaces decreases, and anti-wear performance improves. However, when the groove width becomes wider than 15% of the pitch length, it becomes difficult to sufficiently ensure the negative ratio of the center region and the movement of shoulder blocks in the width direction increases too much.

Further, in order to maintain the above-described effect through the end of the wear life, that is, in order to make it difficult for the tire to wear through the end of the wear life, the groove depths of the width direction narrow width grooves and the circumferential direction auxiliary grooves is made 70% or more and 100% or less of the lug groove depth. When the groove depth is shallower than 70%, the effect resulting from the above-described narrow width grooves cannot be exhibited from the middle of wear on, which is not preferable, and when the groove depth is deeper than 100%, it becomes easier for cracks to occur in the groove bottoms of the narrow width grooves, which is not preferable.

Further, by giving the circumferential direction auxiliary grooves this configuration, the circumferential direction auxiliary grooves do not close within the tread surfaced during ground contact.

Further, in order to ensure an edge component in the circumferential direction providing an effect with respect to preventing skidding in a lateral direction, it is necessary to make the average angle that the lug grooves form (more accurately, the average angle that the groove width centerlines of the lug grooves form) with respect to the tire circumferential direction 80° or less. When the average angle becomes smaller than 65°, a direction in which block rigidity is weak occurs due to the input direction of force, and uneven wear occurs in the blocks. Consequently, it is necessary to make this angle 65° or greater.

In an invention recited in claim 2, the circumferential direction auxiliary grooves extend in a zigzag manner in the tire circumferential direction, and an angle formed by groove portions that are adjacent and slant in mutually different directions with respect to the tire circumferential direction is within the range of 30 to 120°.

When the angle is less than 30°, sometimes the strength becomes weaker because the center block ends become too narrow, which may cause block chipping and uneven wear. Further, when the angle is greater than 120°, sometimes a sufficient edge effect can no longer be exhibited in the width direction.

In an invention recited in claim 3, closure preventing projections isolatingly disposed in the tire circumferential direction are disposed in groove bottoms of the circumferential direction auxiliary grooves, and the height of the closure preventing projections is within the range of 20 to 100% of the groove depth of the circumferential direction auxiliary grooves.

Thus, the circumferential direction auxiliary grooves can be reliably prevented from closing during ground contact.

In an invention recited in claim 4, the lug grooves open to circumferential direction main grooves at tread ends, and lug groove open end portions of in the tread ends form an angle of 90° with respect to the tire circumferential direction.

Thus, it can be made difficult for block chipping and uneven wear to occur. In the invention recited in claim 4, oftentimes the lug grooves are caused to flex in the middle.

In an invention recited in claim 5, at a crown center portion, a tread gauge has a thickness within the range of 8 to 18% of a tire section height.

Thus, a balance can be achieved in terms of preventing cut-burst when rolling on rocks and ensuring a sufficient wear-use volume and heat-releasing function in the crown center portion of the tread portion.

Effects of the Invention

According to the present invention, a tire for a heavy duty vehicle whose wear resistance is excellent on both wet and dry road surfaces can be realized.

Brief Description of the Drawings

[FIG 1] A tire radial direction cross-sectional diagram of a tire for a heavy duty vehicle pertaining to an embodiment of the present invention.

[FIG 2] A plan diagram showing a tread pattern of the tire for a heavy duty vehicle pertaining to the embodiment of the present invention.

[FIG 3] A plan diagram showing a modification of the tread pattern of the tire for a heavy duty vehicle pertaining to the embodiment of the present invention.

[FIG 4] A plan diagram showing a tread pattern of a tire for a heavy duty vehicle of conventional example 1.

[FIG 5] A plan diagram showing a tread pattern of a tire for a heavy duty vehicle of conventional example 2.

[FIG 6] A plan diagram showing a tread pattern of a tire for a heavy duty vehicle of conventional example 3.

Best Mode for Implementing the Invention

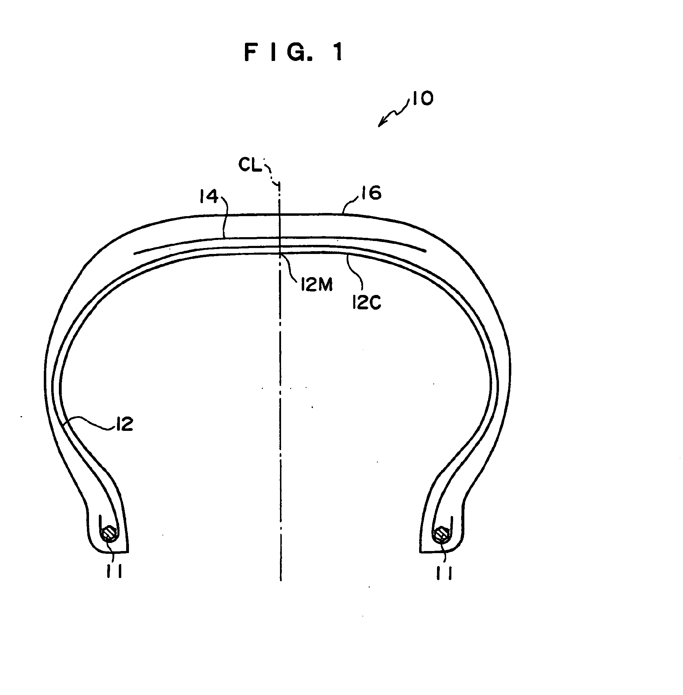

A mode for implementing the present invention will be described below by way of an embodiment. As shown FIG 1, a tire 10 for a heavy duty vehicle pertaining to the embodiment of the present invention sequentially includes, on the outside of a crown portion 12C of a carcass 12 extending toroidally from a pair of bead cores 11, a belt 14 and a tread portion 16 disposed with grooves.

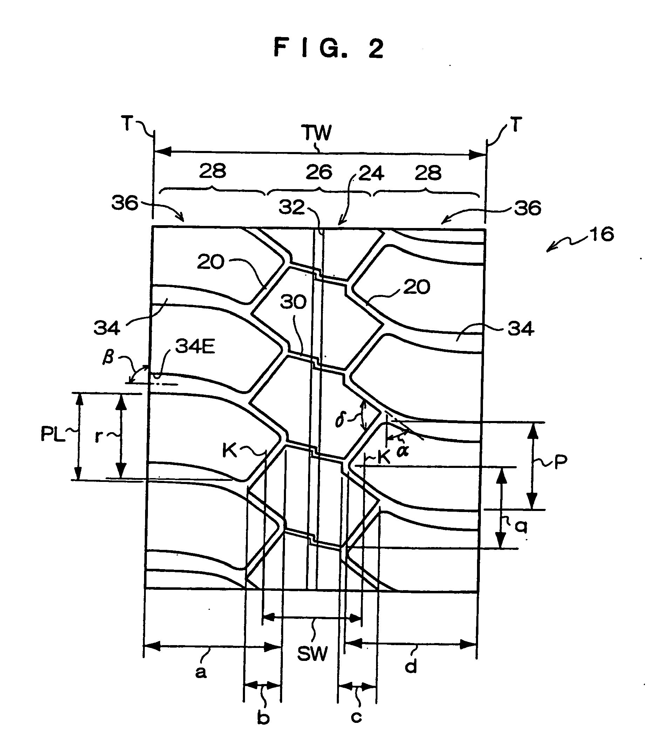

As shown in FIG 2, a pair of circumferential direction auxiliary grooves 20 of a relatively narrow width is formed in the tread portion 16 on both sides of a tire centerline CL, and one center land portion row 24 that straddles the tire centerline CL is disposed by these circumferential direction auxiliary grooves 20. Both of the pair of circumferential direction auxiliary grooves 20 extend in a zigzag manner in a tire circumferential direction. Here, "extend in a zigzag manner in a tire circumferential direction" means that groove portions that slant with respect to the tire circumferential direction extend in the tire circumferential direction while turning back such that their slanting directions alternate. In the present embodiment, an angle $\delta$ formed by groove portions that are adjacent and slant in mutually different directions with respect to the tire circumferential direction is set within the range of 30 to 120°.

A distance SW between amplitude centerlines K of the pair of circumferential direction auxiliary grooves 20 is set within the range of 25 to 65% of a tread width TW.

The tread portion 16 is partitioned by the pair of circumferential direction auxiliary grooves 20 into a center region 26, which is the tire center side of the pair of circumferential direction auxiliary grooves 20, and two side regions 28, which are both tire width direction sides of the pair of circumferential direction auxiliary grooves 20.

Further, width direction narrow width grooves 30 that interconnect the pair of circumferential direction auxiliary grooves 20 are formed in the tread portion 16. The center land portion row 24 is configured by numerous pseudo-block rows by the width direction narrow width grooves 30.

A shallow tire center groove 32 that disappears at the initial stage of wear life is formed on the tire centerline CL. The negative ratio of the center and portion row 24 is within the range of 10 to 20%, and the negative ratios of the two block rows 26 are within the range of 15 to 27% on both sides of the tire centerline CL.

Lug grooves 34 are formed at an equal pitch in the two side regions 28, and a pair of block rows 36 partitioned by the pair of circumferential direction auxiliary grooves 20 and the lug grooves 34 is formed in the two side regions 28.

An average angle $\alpha$ that the groove width centerlines of the lug grooves 34 form with respect to the tire circumferential direction is within the range of 65 to 80°.

The groove depths of the circumferential direction auxiliary grooves 20 and the width direction narrow width grooves 30 are within the range of 70 to 100% of the groove depth of the lug grooves 34. The groove width of the circumferential direction auxiliary grooves 20 is within the range of 5 to 15% of a pitch length (one pitch) PL of the lug grooves 34, and the groove width of the width direction narrow width grooves 30 is within the range of 3.5 to 4.5% of the pitch length PL of the lug grooves 34.

Further, in regard to non-closure grooves per pitch length PL of the lug grooves 34 within the ground contact surface at the time of a load, a total edge length Eh in the width direction is within the range of 100 to 150% of the tread width TW. Here, Eh is a value calculated by the following expression using the lengths a to d in FIG 2

$$Eh = a + b + c + d$$

Further, in regard to non-closure grooves per pitch length PL of the lug grooves 34 within the ground contact surface at the time of a load, a total edge length Es in the circumferential direction is within the range of 220 to 300% of the pitch length PL. Here, Es is a value calculated by the following expression using the lengths p to r in FIG 2.

$$Es = p + q + r$$

Further, the lug grooves 34 flex in the middle and open to circumferential direction main grooves (not shown) at tread ends T, and lug groove open end portions 34E at the tread ends T form an angle $\beta$ equal to 90° with respect to the tire circumferential direction. Thus, a structure is provided whereby it is difficult for block chipping and uneven wear to arise.

Further, in the present embodiment, a tread gauge of a crown center portion 12M (see FIG 1) has a thickness in the range of 8 to 18% of a tire section height.

As described above, in the present embodiment, the negative ratio of the center land portion row 24 is set to 20% or less, and movement of the tread pattern from step-in to kick-out that is a large cause of wear can be controlled. Further, heat-releasability can be maintained because the negative ratio of the center land portion row 24 is set to 10% or more.

Further, the negative ratios of the two block rows 36 are within the range of 15 to 27%, and traction performance of the shoulder portions is ensured.

Moreover, because the width direction narrow width grooves 30 are formed in the center land portion row 24 and the dimensions of the width direction narrow width grooves 30 are defined as described above, the width direction narrow width grooves 30 close within the tread surface during ground contact. Thus, the width direction narrow width grooves 30 can eliminate the difference in the diameters of the centerline portion and the shoulder portions and make the ground contact distribution flat.

Further, because the circumferential direction auxiliary grooves 20 have a groove width of 5% or more of the pitch length of the lug grooves 34, the edge component within the ground contacting tread surface increases, slippage on wet and muddy road surfaces decreases, and anti-wear performance improves. Further, because the circumferential direction auxiliary grooves 20 have a groove width of 15% or less of the pitch length of the lug grooves 34, the negative ratio of the center region 26 can be sufficiently ensured and movement of the shoulder blocks in the width direction of the shoulder blocks can be prevented from increasing too much. Further, because the circumferential direction auxiliary grooves 20 are given this configuration, the circumferential direction auxiliary grooves 20 do not close within the tread surface during ground contact.

Additionally, the groove depths of the width direction narrow width grooves 30 and the circumferential direction auxiliary grooves 20 are 70% or more and 100% or less of the groove depth of the lug grooves 34, whereby the tire can be made more difficult to wear through the end of its wear life.

Further, because the average angle $\alpha$ that the groove width centerlines of the lug grooves 34 form with respect to the tire circumferential direction is set within the range of 65 to 80°, uneven wear does not occur in the blocks and skidding can be prevented.

Moreover, the total edge length Eh in the width direction is within the range of 100 to 150% of the tread width TW, and the total edge length Es in the circumferential direction is within the range of 220 to 300% of the above-described pitch length PL. Thus, a balance can be achieved in terms of improving wear resistance and maintaining slip control because a slip controlling effect that is the same as has conventionally been the case can be exhibited.

Further, the tread gauge of the crown center portion 12M has a thickness within the range of 8 to 18% of the tire section height, whereby a balance can be achieved in terms of preventing cut-burst when rolling on rocks and ensuring a sufficient wear-use volume and heat-releasing function in the crown center portion of the tread portion.

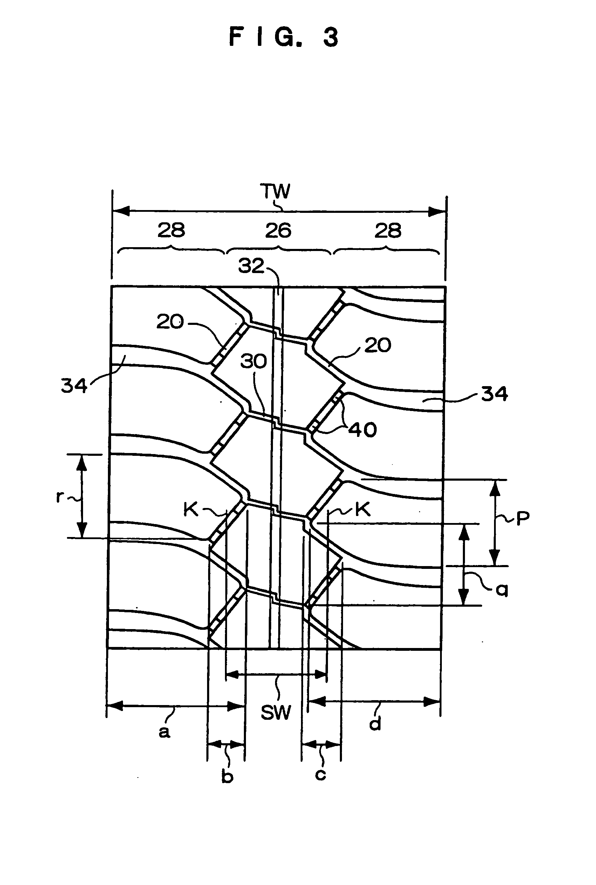

It will be noted that, as shown in FIG. 3, closure preventing projections 40 isolatingly disposed in the tire circumferential direction may also be disposed in groove bottoms of the circumferential direction auxiliary grooves 20. In this case, the height of the closure preventing projections 40 is set within the range of 20 to 100% of the groove depth of the circumferential direction auxiliary grooves 20. By disposing the closure preventing projections 40 in this manner, the circumferential direction auxiliary grooves 20 can be reliably prevented from closing during ground contact.

<Test Examples>

The present inventor conducted a performance test first using a tire for a heavy duty vehicle of a conventional example 1 (tire size: 40.00R57)

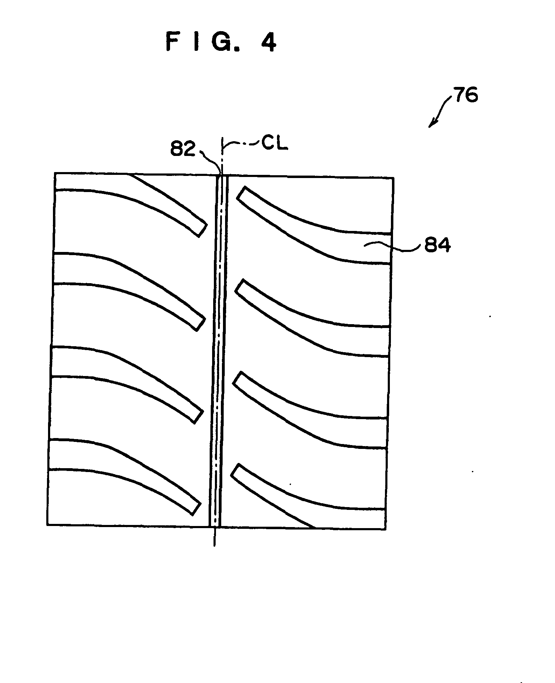

The tire for a heavy duty vehicle of conventional example 1 included a tread portion 76 in which the tread pattern shown in FIG. 4 was formed. In this tread portion 76, a circumferential direction main groove 82 is formed on a tire centerline CL, and lug grooves 84 are formed point-symmetrically on both tire width direction sides of the circumferential direction main groove 82. The tread conditions of the tire for a heavy duty vehicle of conventional example 1 are shown in Table 1.

[Table 1]

| | | Embodiment | Conventional Example 1 | Conventional Example 2 | Conventional Example 3 |
|---|---|---|---|---|---|
| SW/TW (%) | | 32 | --- | 44 | 34 |
| Negative Ratio of Tread Region (%) | Center Region (%) | 13 | 22 | 20 | 5 |
| | Both Side Regions (%) | 20 | | 32 | 23 |
| Md/Gd (%) | | 83 | --- | 100 | 83 |
| Mw/PL (%) | Circumferential Direction Auxiliary Grooves | 8.0 | --- | 18.0 | 4.2 |
| | Width Direction Narrow Width Grooves | 4.2 | | 7.0 | 4.2 |
| Lug Groove Angle $\alpha$ (°) | | 78 | 70 | 75 | 90 |
| Total Edge Length Eh (%) in Width Direction with respect to Tread Width | | 103 | 91 | 106 | 58 |
| Total Edge Length Es (%) in Circumferential Direction with respect to Pitch Length PL | | 275 | 198 | 317 | 100 |

A 240 ton-use dump truck was used as the vehicle used in the test. As the test conditions, the dump truck was driven in a mine having a rainy season and a dry season, fitted with the tires for a heavy duty vehicle of conventional example 1 in both periods of the rainy season and the dry season, and performed ordinary work for about three months.

Additionally, wear resistance was evaluated by measuring the wear on the tread rubber of the tire. In this evaluation, the wear on the tread rubber was measured in regard to both (1) a state where the road surface was dry (dry state) and (2) a state where the road surface was wet and muddy (muddy & wet state), and in both an index of 100 was used as an anti-wear index reference value.

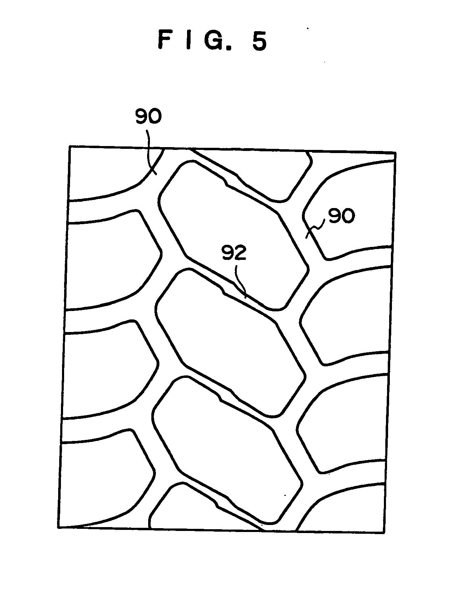

Further, the present inventor used a tire for a heavy duty vehicle of a conventional example 2 where the tire specifications and the tread width were the same as those of conventional example 1 but where the tread pattern was different from that of conventional example 1 (see FIG 5). The tread pattern of the tire for a heavy duty vehicle of conventional example 2 resembled the tire for a heavy duty vehicle of the embodiment, but in comparison to the tire for a heavy duty vehicle, circumferential direction main grooves 90 extending in a zigzag manner in the tire circumferential direction were formed instead of the circumferential direction auxiliary grooves 20, and the dimension of width direction narrow width grooves 92 was different. The tread conditions of the tire for a heavy duty vehicle of conventional example 2 are shown together in Table 1. It will be noted that in Table 1, Md represents the groove depths of the circumferential direction auxiliary grooves and the width direction narrow width grooves, and Gd represents the groove depth of the lug grooves. Further, Mw represents the groove widths of the circumferential direction auxiliary grooves and the width direction narrow width grooves.

Additionally, the present inventor used the tire for a heavy duty vehicle of conventional example 2 to conduct a performance test in the same manner as that of the tire for a heavy duty vehicle of conventional example 1, and calculated the anti-wear index serving as a relative evaluation with respect to the tire for a heavy duty vehicle of conventional example 1. The larger the index is, the better performance was.

Moreover, the present invention used a tire for a heavy duty vehicle of a conventional example 3 where the tire specifications and the tread width were the same as those of conventional example 1 but where the tread pattern was different from that of conventional example 1 (see FIG 6). The tread pattern of the tire for a heavy duty vehicle of conventional example 3 resembled that of the tire for a heavy duty vehicle pertaining to the embodiment, but in comparison to the tire for a heavy duty vehicle, the dimensions of circumferential direction auxiliary grooves 100 and width direction narrow width grooves 102 were different. The circumferential direction auxiliary grooves 100 were grooves of a narrow width. The tread conditions of the tire for a heavy duty vehicle of conventional example 3 are shown together in Table 1.

Additionally, the present inventor used the tire for a heavy duty vehicle of - conventional example 3 to conduct a performance test in the same manner as that of the tires for a heavy duty vehicle of conventional example 1 and conventional example 2, and calculated the anti-wear index serving as a relative evaluation with respect to the tire for a heavy duty vehicle of conventional example 1.

Moreover, as the tire for a heavy duty vehicle pertaining to the embodiment, the present inventor manufactured a tire for a heavy duty vehicle whose tire specifications and tread width were the same as those of conventional example 1 and whose tread conditions are shown in Table 1, and used this as the tire for a heavy duty vehicle of the embodiment.

Additionally, the present inventor used the tire for a heavy duty vehicle of the embodiment to conduct a performance test in the same manner as that of the tires for a heavy duty vehicle of conventional examples 1 to 3, and calculated the anti-wear index serving as a relative evaluation with respect to the tire for a heavy duty vehicle of conventional example 1.

As will be understood, the result was that the tire for a heavy duty vehicle of the embodiment was better in regard to both items (1) and (2) in comparison to the tires for a heavy duty vehicle of conventional examples 1 and 2. Further, in comparison to the tire for a heavy duty vehicle of conventional example 3, the result was that the anti-wear index of (1) was the same but the anti-wear index of (2) was much better.

A mode for implementing the present invention has been described above by way of an embodiment, but the above-described embodiment is one example and can be variously modified and implemented within a range that does not depart from the scope of the appended claim. Further, it goes without saying that the scope of the rights of the present invention is not limited to the above-described embodiment, but to the scope of the appended claim.

Industrial Applicability

The present invention can be utilized as a tire for a heavy duty vehicle whose wear resistance is excellent on both wet and dry road surfaces, and is optimum particularly for use in mines and construction sites.

Description of the Reference Numerals

10      Tire for a Heavy Duty Vehicle

12M    Crown Center Portion

16      Tread Portion

20      Circumferential Direction Auxiliary Grooves

24      Center Land Portion Row

30      Width Direction Narrow Width Grooves

26      Center Region

| 34 | Lug Grooves |
|----|-------------|
| 36 | Block Rows |
| 40 | Closure Preventing Projections |
| 76 | Tread Portion |
| 82 | Circumferential Direction Main Groove |
| 84 | Lug Grooves |
| 90 | Circumferential Direction Main Grooves |
| 92 | Width Direction Narrow Width Grooves |
| 100 | Circumferential Direction Auxiliary Grooves |
| 102 | Width Direction Narrow Width Grooves |

**Claims**

1. A tire (10) for a heavy duty vehicle that sequentially includes, on the outside of a crown portion (12c) of a carcass (12) extending toroidally, a belt (14) and a tread portion (16) disposed with grooves, the tire comprising:

   one center land portion row (24) that straddles a tire centerline, being disposed in a center region (26) of the tread portion (16), with a pair of circumferential direction auxiliary grooves (20) being formed on both sides of the tire centerline, a distance between amplitude centerlines (12) of the pair of circumferential direction auxiliary grooves (20) being within the range of 25 to 65% of a tread width (TW), width direction narrow width grooves (30) formed to interconnect the pair of circumferential direction auxiliary grooves (20), whereby the center land portion row (24) is configured by numerous pseudo-block rows, and
   a pair of block rows (36) partitioned by the pair of circumferential direction grooves (20) and by lug grooves (34), on both tire width direction sides of the pair of circumferential direction auxiliary grooves (20),
   wherein
   the groove depths of the circumferential direction auxiliary grooves (20) and the width direction narrow width grooves (30) are within the range of 70 to 100% of the groove depth of the lug grooves and
   an average angle that the lug grooves (34) form with respect to a tire circumferential direction is within the range of 65 to 80°, **characterized in that** the negative ratio of the center land portion row (24) is within the range of 10 to 20%, the negative ratios of the block rows (36) are both within the range of 15 to 27%, and the groove width of the circumferential direction auxiliary grooves (20) is within the range of 5 to 15% of one pitch (PL) of the lug grooves (34), the groove width of the width direction narrow width grooves (30) is within the range of 3.5 to 4.5% of one pitch (PL) of the lug groove (34).

2. The tire (10) for a heavy duty vehicle of claim 1, wherein the circumferential direction auxiliary grooves (20) extend in a zigzag manner in the tire circumferential direction, and an angle (8) formed by groove portions that are adjacent and slant in mutually different directions with respect to the tire circumferential direction is within the range of 30 to 120°.

3. The tire (10) for a heavy duty vehicle of any one of claims 1 or 2, wherein closure preventing projections (40) isolatingly disposed in the tire circumferential direction are disposed in groove bottoms of the circumferential direction auxiliary grooves (20), and the height of the closure preventing projections (40) is within the range of 20 to 100% of the groove depth of the circumferential direction auxiliary grooves (20).

4. The tire (10) for a heavy duty vehicle of any one of claims 1 to 3, wherein the lug grooves (34) open to circumferential direction main grooves at tread ends, and lug groove open end portions of in the tread ends form an angle of 90° with respect to the tire circumferential direction.

**5.** The tire (10) for a heavy duty vehicle of any one of claims 1 to 4, wherein at a crown center portion (120), a tread gauge has a thickness within the range of 8 to 18% of a tire section height.

**Patentansprüche**

**1.** Reifen (10) für ein Schwerlastfahrzeug, der aufeinanderfolgend auf der Außenseite eines Zenitabschnittes (12C) einer sich ringförmig erstreckenden Karkasse (12), einen Gürtel (14) und einen Laufflächenabschnitt (16) umfasst, der mit Rillen angeordnet ist, wobei der Reifen aufweist:

eine mittlere Stegabschnittsreihe (24), die eine Reifenmittellinie überbrückt, wobei sie in einen mittleren Bereich (26) des Laufflächenabschnittes (16) mit einem Paar sich in der Umfangsrichtung erstreckenden Nebenrillen (20), die auf beiden Seiten der Reifenmittellinie ausgebildet sind, angeordnet ist, wobei ein Abstand zwischen den Amplitudenmittellinien (K) des Paares der sich in der Umfangsrichtung erstreckenden Nebenrillen (20) innerhalb des Bereiches von 25 bis 65 % einer Laufflächenbreite (TW) liegt, wobei sich in der Breitenrichtung erstreckende Rillen (30) mit schmaler Breite ausgebildet sind, um das Paar der sich in der Umfangsrichtung erstreckenden Nebenrillen (20) miteinander zu verbinden, wobei die mittlere Stegabschnittsreihe (24) durch zahlreiche Pseudoblockreihen ausgebildet wird; und

ein Paar Blockreihen (36), die durch das Paar der sich in der Umfangsrichtung erstreckenden Rillen (20) und durch Stollenrillen (34) auf beiden Seiten des Paares der sich in der Umfangsrichtung erstreckenden Nebenrillen (20) in der Breitenrichtung des Reifens unterteilt werden, wobei

die Rillentiefen der sich in der Umfangsrichtung erstreckenden Nebenrillen (20) und der sich in der Breitenrichtung erstreckenden Rillen (30) mit der schmalen Breite innerhalb des Bereiches von 70 bis 100 % der Rillentiefe der Stollenrillen liegen; und

ein mittlerer Winkel, den die Stollenrillen (34) mit Bezugnahme auf eine Reifenumfangsrichtung bilden, innerhalb des Bereiches von 65 bis 80° liegt, **dadurch gekennzeichnet, dass**

das negative Verhältnis der mittleren Stegabschnittsreihe (24) innerhalb des Bereiches von 10 bis 20 % liegt; die negativen Verhältnisse der Blockreihen (36) beide innerhalb des Bereiches von 15 bis 27 % liegen; und die Rillenbreite der sich in der Umfangsrichtung erstreckenden Nebenrillen (20) innerhalb des Bereiches von 5 bis 15 % einer Teilung (PL) der Stollenrillen (34) liegt;

die Rillenbreite der sich in der Breitenrichtung erstreckenden Rillen (30) mit der schmalen Breite innerhalb des Bereiches von 3,5 bis 4,5 % einer Teilung (PL) der Stollenrillen (34) liegt.

**2.** Reifen (10) für ein Schwerlastfahrzeug nach Anspruch 1, bei dem die sich in der Umfangsrichtung erstreckenden Nebenrillen (20) sich in einer zickzackartigen Weise in der Reifenumfangsrichtung erstrecken und ein Winkel (δ), der durch die Rillenabschnitte gebildet wird, die benachbart und in gegenseitig unterschiedlichen Richtungen mit Bezugnahme auf die Reifenumfangsrichtung schräg sind, innerhalb des Bereiches von 30 bis 120° liegt.

**3.** Reifen (10) für ein Schwerlastfahrzeug nach einem der Ansprüche 1 oder 2, bei dem Vorsprünge (40), die ein Verschließen verhindern, die in trennender Weise in der Reifenumfangsrichtung angeordnet sind, in den Rillenböden der sich in der Umfangsrichtung erstreckenden Nebenrillen (20) angeordnet sind, und bei dem die Höhe der Vorsprünge (40), die ein Verschließen verhindern, innerhalb des Bereiches von 20 bis 100 % der Rillentiefe der sich in der Umfangsrichtung erstreckenden Nebenrillen (20) liegt.

**4.** Reifen (10) für ein Schwerlastfahrzeug nach einem der Ansprüche 1 bis 3, bei dem die Stollenrillen (34), die zu den sich in der Umfangsrichtung erstreckenden Hauptrillen an den Laufflächenenden offen sind, und die offenen Endabschnitte der Stollenrille in den Laufflächenenden einen Winkel von 90° mit Bezugnahme auf die Reifenumfangsrichtung bilden.

**5.** Reifen (10) für ein Schwerlastfahrzeug nach einem der Ansprüche 1 bis 4, bei dem in einem Zenitmittelabschnitt (12C) eine Laufflächendicke eine Dicke innerhalb des Bereiches von 8 bis 18 % einer Reifenschnitthöhe aufweist.

**Revendications**

**1.** Pneumatique (10) destiné à un véhicule utilitaire lourd qui comprend, séquentiellement, sur l'extérieur d'une partie sommet (12c) d'une carcasse (12) s'étendant de façon toroïdale, une ceinture (14) et une partie bande de roulement (16) pourvue de rainures, le pneumatique comprenant :

une rangée de parties de surface centrales (24) qui chevauche une ligne médiane de pneu, étant située dans une région centrale (26) de la partie bande de roulement (16), une paire de rainures auxiliaires de direction circonférentielle (20) étant formée sur les deux côtés de la ligne centrale de pneu, une distance entre des lignes médianes d'amplitude (K) de la paire de rainures auxiliaires de direction circonférentielle (20) étant comprise entre 25 % et 65 % d'une largeur de bande de roulement (Tw), des rainures de faible largeur dans le sens de la largeur (30) étant formées pour relier mutuellement la paire de rainures auxiliaires de direction circonférentielle (20), grâce à quoi la rangée de parties de surface centrales (24) est constituée par de nombreuses rangées de pseudo-blocs, et

une paire de rangées de blocs (36) divisée par la paire de rainures auxiliaires de direction circonférentielle (20) et par des rainures de barrette (34) sur les deux côtés dans le sens de la largeur du pneu de la paire de rainures auxiliaires de direction circonférentielle (20),

les profondeurs de rainure des rainures auxiliaires de direction circonférentielle (20) et des rainures de faible largeur dans le sens de la largeur (30) étant dans la plage de 70 % à 100 % de la profondeur de rainure des rainures de barrette, et

un angle moyen que les rainures de barrette (34) forment par rapport à une direction circonférentielle de pneu étant dans la plage de 65 à 80°, **caractérisé en ce que**

le rapport négatif de la rangée de parties de surface centrales (24) est dans la plage de 10 % à 20 %, les rapports négatifs des rangées de blocs (36) étant situés dans la plage de 15 % à 27 %, et la largeur de rainure des rainures auxiliaires de direction circonférentielle (20) est dans la plage de 5 % à 15 % d'un pas (PL) des rainures de barrette (34) ;

la largeur de rainure des rainures (30) de largeur étroite s'étendant dans le sens de la largeur se situant dans la plage allant de 3,5 à 4,5% d'un pas (PL) des rainures de barrette.

2. Pneumatique (10) destiné à un véhicule utilitaire lourd selon la revendication 1, dans lequel les rainures auxiliaires de direction circonférentielle (20) s'étendent en zigzag dans la direction circonférentielle de pneu, et un angle ($\delta$) formé par des parties de rainure qui sont adjacentes et inclinées dans des directions mutuellement différentes par rapport à la direction circonférentielle de pneu est compris entre 30° et 120°.

3. Pneumatique (10) destiné à un véhicule utilitaire lourd selon l'une quelconque des revendications 1 ou 2, dans lequel des saillies anti-fermeture (40) disposées de manière isolée dans la direction circonférentielle de pneu sont situées dans des fonds de rainure des rainures auxiliaires de direction circonférentielle (20), et la hauteur des saillies anti-fermeture (40) est dans la plage de 20 % à 100 % de la profondeur de rainure des rainures auxiliaires de direction circonférentielle (20).

4. Pneumatique (10) destiné à un véhicule utilitaire lourd selon l'une quelconque des revendications 1 à 3, dans lequel les rainures de barrette (34) s'ouvrent sur des rainures principales de direction circonférentielle aux extrémités de bande de roulement, et des parties d'extrémité ouvertes de rainures de barrette aux extrémités de bande de roulement forment un angle de 90° par rapport à la direction circonférentielle de pneu.

5. Pneumatique (10) destiné à un véhicule utilitaire lourd selon l'une quelconque des revendications 1 à 4, dans lequel, en une partie sommet centrale (12c) la bande de roulement a une épaisseur dans la plage de 8 % à 18 % d'une hauteur de section de pneu.

**F I G. 1**

# F I G. 2

# F I G. 3

# F I G. 4

FIG. 5

F I G. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02100664 A
- JP 2001225608 A
- JP 2000233610 A
- JP 2001277816 A
- JP 2004262295 B

**Non-patent literature cited in the description**

- JATMA Year Book. Japan Automotive Tire Manufacturers Association standard, 2002